# FASCICULE DE BREVET EUROPEEN

(11) **EP 1 709 702 B1**
(45) Date de publication et mention de la délivrance du brevet: **05.12.2007**
(21) Numéro de dépôt: 05717687.7
(22) Date de dépôt: 26.01.2005
(51) Int. Cl.: H01M 4/04, H01M 4/58

(54) **PROCEDE DE PREPARATION DE MATERIAUX COMPOSITES COMPRENANT UN COMPOSE ACTIF D'ELECTRODE ET UN COMPOSE CONDUCTEUR ELECTRONIQUE TEL QUE LE CARBONE NOTAMMENT POUR ACCUMULATEURS AU LITHIUM**
VERFAHREN ZUR HERSTELLUNG VON VERBUNDMATERIALIEN MIT EINER ELEKTRODENAKTIVZUSAMMENSETZUNG UND EINEM ELEKTRONENLEITER WIE ZUM BEISPIEL KOHLENSTOFF INSBESONDERE FÜR EINE LITHIUMBATTERIE
METHOD FOR PREPARING COMPOSITE MATERIALS COMPRISING AN ELECTRODE ACTIVE COMPOUND AND AN ELECTRONIC CONDUCTOR SUCH AS CARBON IN PARTICULAR FOR A LITHIUM BATTERY

(30) Priorité: 28.01.2004 FR 0450156
(43) Date de publication de la demande: 11.10.2006
(73) Titulaire: COMMISSARIAT A L'ENERGIE ATOMIQUE, 75015 Paris (FR)
(72) Inventeur: GAUTHIER, Gilles, F-38850 BILLIEU (FR); LE CRAS, Frédéric, F-38470 NOTRE DAME-DE-L'OSIER (FR); LIGNIER, Hélène, F-38380 SAINT-LAURENT-DU-PONT (FR); GABELLE, Jean-Louis, F-38920 CROLLES (FR)
(74) Mandataire: Poulin, Gérard
(86) Numéro de dépôt international: PCT/FR2005/050045
(87) Numéro de publication internationale: WO 2005/076390

(56) Documents cités:
- WO-A-97/40541
- WO-A-02/083555
- BE-A- 735 476
- CA-A- 2 270 771
- CH-A- 513 769
- US-A- 3 330 697
- DU K ET AL: "Preparation and performance of spinel LiMn2O4 by a citrate route with combustion" JOURNAL OF ALLOYS AND COMPOUNDS, ELSEVIER SEQUOIA, LAUSANNE, CH, vol. 352, no. 1-2, 24 mars 2003 (2003-03-24), pages 250-254, XP004416940 ISSN: 0925-8388

## Description

La présente invention concerne un procédé de préparation de matériaux composites comprenant un composé actif d'électrode, tel qu'un composé d'insertion d'un ion alcalin comme un ion lithium, et un composé conducteur électronique, tel que le carbone.

Ces matériaux composites trouvent notamment leur application dans des dispositifs contenant lesdits composés et/ou matériaux actifs, tels que les dispositifs électrochromes et les accumulateurs ou batteries, en particulier les accumulateurs au lithium.

Les accumulateurs au lithium sont de plus en plus utilisés comme sources d'énergie autonomes, en particulier, dans les équipements portables, tels que les ordinateurs, les téléphones, les assistants personnels, les caméscopes, etc., où ils tendent à remplacer progressivement les accumulateurs nickel-cadmium (NiCd) et nickel-hydrure métallique (NiMH). Cette évolution découle du fait que les performances des accumulateurs au lithium en termes de densité d'énergie (Wh/kg, Wh/l) sont largement supérieures à celles des deux filières citées précédemment .

Les composés actifs d'électrodes utilisés dans ces accumulateurs sont principalement LiCoO₂, LiNiO₂ et LiMn₂O₄ pour l'électrode positive et du carbone, tel que du graphite ou du coke, etc., pour l'électrode négative. Les capacités théoriques et pratiques de ces composés sont respectivement de 275 mAh/g et 140 mAh/g pour LiCoO₂ et LiNiO₂, et de 148 mAh/g et 120 mAh/g pour LiMn₂O₄, pour une tension de fonctionnement par rapport au lithium métallique voisine de 4 volts.

La plupart des systèmes d'accumulateurs actuellement commercialisés utilisent ainsi le couple LiCoO₂/C, mais il se pose de nombreux problèmes de coût et de toxicité qui sont liés à l'élément cobalt, et des problèmes de sécurité intrinsèque du système liés à l'instabilité et/ou la réactivité de Li₁₋ₓCoₓO₂, vis-à-vis de l'électrolyte utilisé.

De la même manière, les oxydes de nickel posent des difficultés importantes, de nouveau à cause de leur toxicité élevée.

Les oxydes de manganèse, quant à eux, et particulièrement la famille de structure spinelle Li₁₊ₓMn₂₋ₓO₄ (0 ≤ x ≤ 0,33), sont en mesure de démontrer des performances électrochimiques comparables à celles des oxydes de cobalt et de nickel. Il apparaît de plus que la plus grande abondance naturelle du manganèse et la plus faible toxicité de ses oxydes par rapport au cobalt et au nickel sont un avantage important pour leur large utilisation dans les accumulateurs.

Dans le cas particulier de LiMn₂O₄, il est néanmoins établi que son usage combiné avec des électrolytes formulés pour un fonctionnement au voisinage de 4 volts par rapport au lithium métallique qui contiennent de l'hexafluorophosphate de lithium débouche sur une dissolution progressive de l'oxyde de manganèse et par voie de conséquence sur une durée de vie plus réduite de l'accumulateur.

Deux familles de composés utilisés pour les réactions électrochimiques sont, d'une part, la famille isotype de l'olivine et, d'autre part, la famille du Nasicon ; rappelons que la dénomination Nasicon signifie sodium (Na) superionic conductor et que ce composé répond à la formule NaₓM₂X₃O₁₂. Ces deux familles sont constituées d'éléments équivalents et se différencient uniquement par le rapport nombre de polyanions/nombre de lithium et par leur structure cristalline. En effet, la famille isotype de l'olivine a une maille cristalline orthorhombique et la famille isotype du Nasicon de formule AₓM₂X₃O₁₂ a une maille rhombohédrique.

Des matériaux de structure isotype de l'olivine à maille cristalline orthorhombique, tel que Li₁₋ₓFeₓPO₄, par exemple LiFePO₄ (triphylite) ont l'avantage d'être potentiellement peu coûteux et non toxiques. Dans le cas de LiFePO₄, l'insertion/extraction du lithium se déroule selon un processus biphasé à 3,45 V/Li+/Li, ce qui rend ce composé stable dans la quasi-totalité des solvants organiques. De plus, il se révèle bien plus stable à l'état chargé (« FePO₄ ») en présence d'électrolyte que les oxydes précédemment cités, induisant une grande sûreté d'utilisation dans les accumulateurs.

Cependant, le problème majeur de cette famille de composés est leurs faibles conductivités électronique et ionique à température ambiante. Ainsi, ceci limite la cinétique d'insertion/désinsertion du lithium au sein de la structure hôte et l'utilisation de ces composés à des régimes de charge/décharge relativement faibles.

Afin de résoudre ce problème et de surmonter ces limitations, divers moyens ont été considérés : on peut ainsi soit réaliser une substitution partielle du fer par un autre métal ; soit réaliser un composite incluant - à côté du composé électrochimiquement actif ou composé actif d'électrode, tel que LiMn₂O₄, LiFePO₄ - un composé conducteur électronique tel que le carbone ; dans ce dernier cas, les deux composés, à savoir le matériau électrochimiquement actif et le carbone, doivent se présenter sous la forme la plus divisée possible afin de raccourcir au maximum les chemins de diffusion ionique et électronique.

Cette dernière manière de procéder est décrite en particulier dans le document canadien CA-A-2 270 771 qui concerne un matériau d'électrode comprenant un oxyde complexe à la surface duquel est déposé de manière homogène un matériau carboné conducteur, par exemple par pyrolyse d'une matière organique tel qu'un polymère.

Les matériaux composites comprenant un composé actif d'électrode et un composé conducteur électronique sont généralement préparés en synthétisant tout d'abord ledit composé actif tel que LiFePO₄, puis en formant le composite : (i) soit par mélange intime du composé actif tel que le phosphate de fer lithié, et de noir de carbone par exemple de noir d'acétylène ; (ii) soit par décomposition sous gaz inerte d'un composé organique, par exemple de la cellulose, à la suite de la synthèse du composé actif tel que LiFePO₄.

Les procédés de synthèse permettant, de manière générale, d'obtenir les composés actifs de formule LiMXO₄ (par exemple LiFePO₄), dans laquelle M représente un métal de transition ou un mélange de métaux de transition, et X représente P, Si, S, Al, Ge ou As, etc., sont soit des procédés par voie solide, soit des procédés par voie aqueuse.

Les procédés de synthèse par voie solide sont des procédés utilisant des réactifs exclusivement à l'état solide, et mettent en jeu des températures élevées, à savoir généralement supérieures à 600°C, qui comprennent généralement la calcination sous atmosphère neutre d'un mélange de précurseurs broyés de manière plus ou moins énergique.

Ces procédés par voie solide comportent de nombreux défauts, aussi bien en ce qui concerne les conditions de leur mise en oeuvre que les produits obtenus.

La synthèse est longue - sa durée peut dépasser 24 heures - et est réalisée dans des conditions que l'on peut qualifier de sévères au niveau, en particulier, de la température qui est extrêmement élevée. Ces conditions sont nécessaires pour obtenir des matériaux de grande pureté et de composition homogène.

De ce fait, ces procédés, dits « de synthèse tout solide », conduisent à des produits finaux, par exemple du LiFePO₄, sous la forme de particules dont la taille est importante.

Cette caractéristique du produit fait que ses propriétés, en tant que matériau d'électrode, ne sont pas bonnes, et que, par voie de conséquence, les performances des accumulateurs qui mettent en oeuvre ces composés ne sont pas satisfaisantes.

Notamment dans le cas de LiFePO₄, les composés obtenus par la voie de synthèse « tout solide », nécessitant des durées élevées de traitement thermiques, impliquent l'utilisation de gaz, (généralement inertes ou légèrement réducteurs) de très haute pureté, à savoir avec une teneur en oxygène inférieure ou égale à 1 ppm. Dans le cas contraire, le matériau présente une teneur en Fe³⁺ élevée, préjudiciable à sa capacité spécifique.

La présence de l'impureté Fe⁺⁺⁺ est préjudiciable à la capacité, puisque seul le Fe⁺⁺ participe à la réaction électrochimique.

Les procédés de synthèse des matériaux actifs par voie aqueuse consistent par exemple en la précipitation de phosphates ou en une synthèse hydrothermale.

Par ailleurs, il existe une autre catégorie de procédés de synthèse de matériaux actifs qui sont appelés procédés "sol-gel" par certains et "liquid mix" par d'autres, qui sont dans tous les cas basés sur une chimie douce en solution de composés oxydes. Ces procédés ont l'avantage de conduire à l'obtention de poudres pures et de grande surface spécifique avec une faible taille de cristallite.

Ces procédés consistent en général à synthétiser un précurseur généralement amorphe éventuellement polymérique qui peut être obtenu à partir de différents composés organiques tels que l'acide citrique et l'éthylène glycol et contenant les cations à associer dans le composé final. L'un des composés organiques joue le plus souvent le rôle de ligand d'un ou plusieurs ions métalliques, la formation de complexes permettant d'assurer une meilleure homogénéité du précurseur et donc du produit final. Ces procédés ont été employés par le passé pour élaborer de nombreux composés oxydes et plus récemment des composés d'électrodes d'accumulateurs au lithium tel que LiMn₂O₄ comme cela est décrit dans le document de K. DU et H. ZHANG "Preparation and performance of spinel LiM2O4 by a citrate route with combustion", Journal of Alloys and Compounds, 352, (2003), p. 250-254.

Parmi ces procédés, on peut citer notamment les procédés dit "procédé ou méthode Pechini" illustré dans le document US-A-3 330 697, et le procédé dit de pyrolyse de précurseurs organiques illustré dans le document BE-A-735476.

En outre, les procédés décrits dans les documents WO-A-02 83555 et CH-A-513 769 font appel à des traitements thermiques extrêmement longs conduisant à des tailles de particules très importantes.

Plus précisément, le document US-A-3 330 697 décrit un procédé de préparation d'une composition céramique dans lequel on dissout au moins un élément du groupe constitué par les oxydes hydratés, les alcoolates, les alpha-hydroxycarboxylate de titane, niobium, et zirconium avec de l'acide citrique dans un polyol tel que l'éthylène glycol, puis on dissout dans la solution obtenue au moins un composé de métal choisi dans le groupe constitué des oxydes, hydroxydes, carbonates et alcoolates de plomb et des métaux alcalino-terreux, et on soumet la composition à une température suffisamment élevée pour en éliminer les composés organiques.

L'utilisation de telles voies de synthèse "sol-gel" dans lesquelles le but est d'obtenir un produit exempt d'impuretés, et entre autres, de carbone nécessite de réaliser la calcination ou pyrolyse du précurseur dans un milieu suffisamment oxydant, de manière à éliminer les résidus carbonés sous forme de CO ou CO₂.

Dans une grande partie des cas, étant donné la mise en présence de matière carbonée et d'un oxydant (ions nitrates ou oxygène de l'atmosphère de calcination, le plus souvent), la décomposition thermique du précurseur, parfois appelé xérogel, s'effectue de manière exothermique et est activée à relativement basse température ; on parle alors de réactions d'autocombustion. Ainsi, par un choix judicieux du rapport oxydant/réducteur entre autre, la poudre obtenue peut être constituée de grains très fins du fait (i) de la basse température nécessaire à l'obtention du composé visé étant donné que le mélange que forme le précurseur, homogène à l'échelle atomique, correspond déjà à la stoechiométrie désirée et au fait que l'auto-combustion conduit à une brusque augmentation de la température du milieu en un temps très court, les cristallites n'ayant pas le temps de croître, (ii) du dégagement rapide de gaz (effet de souffle) qui donne à la poudre un aspect de cendres.

Il convient de remarquer a contrario qu'une température de pyrolyse trop élevée a tendance à conduire à la formation de grains fins mais agglomérés de manière solide.

Pour obtenir le composite souhaité comprenant le matériau actif et le composé conducteur électronique, il est toujours nécessaire à l'issue de la synthèse du matériau actif, notamment par voie sol-gel, de broyer ou de mélanger ce matériau actif avec par exemple un précurseur carboné ou avec le carbone lui-même. L'obtention de la granulométrie, généralement de la granulométrie fine, voulue nécessite encore d'autres opérations en particulier de broyage et de tamisage.

Il existe donc un besoin pour un procédé de préparation d'un matériau composite comprenant un matériau électrochimiquement actif ou matériau actif d'électrode, et un composé conducteur électronique tel que le carbone qui soit simple, présente un nombre limité d'étapes elles-mêmes simples, qui soit rapide, sûr, fiable, et peu coûteux.

Il existe en outre un besoin pour un procédé de préparation d'un tel matériau composite qui donne des produits finaux d'une grande pureté, de morphologie parfaitement contrôlée et homogène, qui présentent d'excellentes propriétés de cinétique électrochimique, et qui puisse être utilisés à des régimes de charge/décharge élevés.

Il existe en particulier un besoin pour un procédé qui permette l'obtention facile et simple d'un produit final, faiblement aggloméré (et/ou dont les agglomérats sont faiblement détruits) de microstructure extrêmement fine et contrôlée.

Le but de la présente invention est de fournir un procédé de préparation d'un matériau composite comprenant un composé actif d'électrode tel qu'un composé d'insertion du lithium, et un composé conducteur électronique tel que le carbone qui réponde, entre autres, aux besoins énumérés ci-dessus.

Le but de la présente invention est encore de fournir un procédé de préparation d'un matériau composite comprenant un composé actif d'électrode encore appelé composé électrochimiquement actif et un composé conducteur électronique, qui ne présente pas les inconvénients, défauts, limitations et désavantages des procédés de l'art antérieur et qui résolve les problèmes des procédés de l'art antérieur.

Ce but, et d'autres encore, sont atteints, conformément à l'invention par un procédé de préparation d'un matériau composite comprenant un composé actif d'électrode de formule AₐD_{d}MₘZ_{z}OₒNₙF_{f} dans laquelle :
- A est un métal alcalin,
- D est choisi parmi les métaux alcalino-terreux et les éléments de la colonne III de la classification périodique des éléments, à l'exclusion de B,
- M est un métal de transition ou un mélange de métaux de transitions,
- Z est un non métal choisi parmi S, Se, P, As, Si, Ge, Sn et B,
- O est l'oxygène, N l'azote et F le fluor,
- a, d, m, z, o, n et f sont des nombres réels supérieurs ou égaux à 0 et sont choisis de manière à assurer l'électroneutralité ;
et un composé conducteur électronique tel que le carbone ;
dans lequel on décompose thermiquement un précurseur mixte homogène contenant tous les éléments A, D, M, Z, O, N et F formant le composé actif d'électrode ainsi qu'un ou plusieurs composés organiques et/ou organométalliques, de façon à obtenir le matériau composite.

Avantageusement, lesdits composés organiques et/ou organométalliques sont des composés carbonés, c'est-à-dire comprenant du carbone, de préférence ces composés comprennent une proportion atomique majoritaire de carbone

Avantageusement, A est choisi parmi Li, Na et leurs mélanges. Le composé actif est dans ce cas un composé d'insertion d'un métal alcalin. De préférence, A est le lithium, et le composé actif d'électrode est alors un composé d'insertion du lithium.

Avantageusement, D est choisi parmi Mg, Al, Ga et leurs mélanges.

Avantageusement, M est choisi parmi Fe, Ni, Co, Mn, V, Mo, Nb, W, Ti et leurs mélanges.

Les composés actifs d'électrode préférés sont choisis parmi les composés d'insertion du lithium et du sodium.

Des exemples de ces composés sont LiFePO₄, LiFeBO₃ et NaFeBO₃.

Le composé conducteur électronique est de préférence du carbone et le pourcentage massique final en composé conducteur électronique tel que le carbone dans le matériau composite est généralement de 0,1 à 55% en masse, de préférence de 0,2 à 15% en masse.

La décomposition thermique, c'est-à-dire sous l'effet de la chaleur, du précurseur mixte homogène que l'on peut aussi qualifier de pyrolyse ou de calcination est généralement réalisée sous vide ou bien dans une atmosphère contrôlée.

Selon l'invention, cette décomposition thermique est réalisée en une durée courte, en des temps courts

L'atmosphère contrôlée est de préférence une atmosphère inerte ou légèrement réductrice.

L'atmosphère inerte est généralement une atmosphère comprenant de l'argon, ou de l'azote ou tout autre gaz inerte, ou un de leurs mélanges.

Ces gaz sont de préférence de haute pureté, c'est-à-dire que la concentration en oxygène de chaque gaz et de l'atmosphère est généralement inférieure ou égale à 1 ppm.

L'atmosphère légèrement réductrice est généralement une atmosphère comprenant quelques % : généralement 1 à 5 ou 10%, (3% par exemple), de gaz hydrogène dans de l'argon ou de l'azote ou tout autre gaz inerte ou leurs mélanges.

La décomposition thermique du précurseur homogène mixte est généralement réalisée à une température modérée, inférieure à 900°C, de préférence inférieure ou égale à 800°C, et de préférence encore inférieure ou égale à 750°C.

Généralement, la décomposition thermique est, en outre, réalisée à une température supérieure à 200°C, en particulier voisine de 600°C.

Par durée courte, temps courts de décomposition thermique, de traitement thermique, on entend des durées généralement inférieures ou égales à 1 heure, de préférence inférieures ou égales à 30 minutes. La décomposition thermique est généralement réalisée en une durée de 5 minutes à 1 heure, de préférence de 10 minutes à 30 minutes, par exemple de 15 minutes.

Généralement, le composé précurseur mixte, homogène est préparé en mettant en contact à l'échelle moléculaire un ou plusieurs composé(s) contenant un ou plusieurs élément(s) choisi(s) parmi les éléments A, D, M, Z, O, N, F formant le composé actif d'électrode avec un ou plusieurs composé(s) organique(s) et/ou organométallique(s), de préférence carbonés, susceptibles d'être décomposés thermiquement (décomposables par la chaleur), afin d'obtenir un mélange du ou desdits composés contenant un ou plusieurs élément(s) choisi(s) parmi les éléments A, D, M, Z, O, N et F et du ou desdits composés organiques et/ou organométalliques.

Il est à noter que lorsque lesdits composés sont des composés organométalliques, ils peuvent éventuellement contenir un ou plusieurs élément(s) choisi(s) parmi A, D, M et Z.

Les proportions et les compositions respectives du ou desdits composé(s) contenant un ou plusieurs éléments choisi(s) parmi A, D, M, Z, O, N, F et dudit ou desdits composé(s) organique(s) et/ou organométalliques, de préférence carbonés, décomposables thermiquement sont choisies pour respecter les proportions - définies notamment par les coefficients a, d, m, z, o, n et f - des éléments A, D, M, Z, O, N, F, et du carbone, dans le matériau composite final.

Ladite mise en contact peut être réalisée en solution, qui peut parfois présenter une ou plusieurs phases en suspension fine, ou bien par une action mécanique généralement intense - dite trituration - sur le mélange "précurseur" des constituants. Dans ce dernier cas, il ne s'agit pas d'une synthèse à l'état solide à proprement parler puisque par action mécanique sur le mélange précurseur, initialement solide, on forme une solution sans ajout ou avec très peu de solvant supplémentaire, en utilisant par exemple l'eau de cristallisation d'un ou des précurseurs.

Généralement à l'issue de la mise en contact, le mélange obtenu est séché pour donner ledit composé précurseur mixte.

Généralement ledit composé précurseur mixte se présente sous la forme d'un solide amorphe, qui est ensuite soumis à la décomposition thermique.

Le procédé selon l'invention comprend une étape spécifique principale unique de décomposition du précurseur mixte homogène en un temps relativement court, à savoir une durée généralement inférieure ou égale à 1 heure, et de préférence inférieure ou égale à 30 min.

Le procédé selon l'invention est fondamentalement différent des procédés de l'art antérieur aussi bien pour ce qui concerne le nombre d'étapes mis en oeuvre, que leur nature, et notamment en ce qui concerne l'étape de traitement thermique qui doit être courte.

Les procédés de l'art antérieur tels que ceux décrits dans les documents WO-A-02 83555 et CH-A-513 769 comportent des étapes de traitement thermique, décomposition thermique, qui sont bien plus longues que celles du procédé selon l'invention et on a constaté que ces longues durées, nécessaires dans l'art antérieur pour obtenir la pureté et l'homogénéité voulues, conduisaient à des tailles de particules importantes.

La durée courte de l'étape de décomposition thermique du procédé de l'invention conduit à des tailles de particules faibles, mais, de manière surprenante, ces particules présentent cependant une grande pureté et une grande homogénéité. Le procédé selon l'invention va ainsi à l'encontre d'un préjugé largement répandu dans l'art antérieur et triomphe de ce préjugé.

Le procédé selon l'invention résout les problèmes des procédés de l'art antérieur pour la préparation de matériaux composites comprenant un composé actif d'électrode et un composé conducteur électronique tel que le carbone, et remédie aux inconvénients, défauts, limitations et désavantages de ces procédés.

Le procédé selon l'invention est simple, fiable, rapide, comporte une seule étape principale, met en oeuvre des réactifs facilement disponibles et peu coûteux.

Le procédé selon l'invention donne un produit final d'une grande pureté. De ce fait, les matériaux préparés par l'invention ne nécessitent aucune étape supplémentaire de purification avant leur utilisation, par exemple avant leur intégration dans le matériau d'électrode positive d'un accumulateur.

Le matériau obtenu, grâce à son procédé de préparation et en particulier grâce à la durée courte de l'étape de décomposition thermique, présente une morphologie parfaitement contrôlée, quant à la taille des particules qui le constituent.

Ces particules sont faiblement agglomérées, et le peu d'agglomérats existant est aisément destructible. En outre ces particules sont parfaitement homogènes en taille. Le produit obtenu a une microstructure extrêmement fine et contrôlée et on peut parler dans ce cas de "nanocomposites".

Ce contrôle de la taille, de son homogénéité et de la microstructure résultante conduisent à d'excellentes performances pour les accumulateurs intégrant les matériaux préparés par le procédé de l'invention, en ce qui concerne leur énergie spécifique et leur comportement en puissance notamment.

Fondamentalement, le procédé selon l'invention, au contraire des procédés de l'art antérieur permet en une seule étape, directement, l'obtention d'une poudre extrêmement fine à grains très peu agglomérés du composé AₐD_{d}MₘZ_{z}OₒNₙF_{f}, intimement mélangée au composé conducteur électronique, tel que le carbone.

Il n'y a aucunement besoin dans le procédé selon l'invention de réaliser des étapes ultérieures, et notamment il n'existe aucune nécessité de broyage ou mélange ultérieur avec un précurseur carboné tel que le carbone lui-même ou encore de tamisage ou triage pour obtenir la finesse voulue.

Le fait que l'on puisse obtenir en une seule étape unique, directement, et avec un temps de décomposition thermique court, un tel matériau composite d'une telle qualité qui est une poudre de composé actif d'une grande finesse intimement mélangée à du carbone, est totalement étonnant et ne peut en aucune manière se déduire de l'art antérieur.

Il est totalement surprenant que cette grande simplicité du procédé aille de pair avec la grande finesse des cristallites de poudre obtenus.

L'invention va maintenant être décrite de manière plus détaillée dans ce qui suit.

Dans le procédé selon l'invention, on commence par préparer un précurseur mixte homogène contenant tous les éléments A, D, M, Z, O, N et F formant le composé actif, d'électrode ou composé électrochimiquement actif ainsi qu'un ou plusieurs composés organiques et/ou organométalliques, de préférence carbonés.

Ce précurseur mixte homogène est généralement préparé par mise en contact à l'échelle moléculaire d'un ou plusieurs composés contenant un ou plusieurs parmi les éléments A, D, M, Z, O, N et F formant le composé actif d'électrode avec un ou plusieurs composés organiques et/ou organométalliques, de préférence carbonés, susceptibles d'être décomposés thermiquement dans les conditions du traitement thermique (court) de décomposition conduisant au matériau composite, afin d'obtenir un mélange desdits composés contenant les éléments A, D, M, Z, O, N, F et desdits composés organiques et/ou organométalliques, de préférence carbonées.

Si l'on met en oeuvre des composés organométalliques, ces composés peuvent contenir un ou plusieurs éléments choisis parmi A, D, M et Z.

Ladite mise en contact peut être réalisée en solution, ladite solution pouvant éventuellement parfois présenter une ou plusieurs phases en suspension fine.

Dans un premier mode de réalisation, on forme ainsi une solution d'ions contenant les éléments à associer dans le composé AₐD_{d}MₘZ_{z}OₒNₙF_{f}, et d'un ou plusieurs composés organiques ou organométalliques, de préférence carbonés, susceptibles de se décomposer thermiquement (décomposable à la chaleur) ; de préférence le ou lesdits composés organiques ou organométalliques sont en outre éventuellement des composés complexants et/ou en outre éventuellement il s'agit de composés polymérisables.

On concentre ensuite très rapidement ladite solution, de manière à la figer et à la sécher, ce qui forme un produit amorphe (précurseur mixte homogène) qui est ensuite décomposé thermiquement.

La concentration rapide de la solution conduit à un liquide généralement d'une viscosité élevée, au moins supérieure à 200 centipoises à 20°C par exemple, ce liquide est ensuite généralement transformé par une concentration plus poussée sous un vide de 10⁻³ atmosphère par exemple, en un solide amorphe qui est décomposé thermiquement en un temps court défini plus haut, pour donner le matériau composite selon l'invention.

Avantageusement, le verre sous forme pulvérulente s'obtient par séchage par atomisation du liquide dans une atmosphère chaude à une température de 300°C par exemple ; le produit final, matériau composite, peut idéalement s'obtenir par séchage et calcination par atomisation du liquide dans une atmosphère suffisamment chaude. Cette étape peut être facilitée si la réaction est une réaction d'autocombustion qui a déjà été décrite plus haut.

Pour obtenir un précurseur mixte puis un matériau composite de composition parfaitement homogène, il est nécessaire d'éviter toute ségrégation des espèces métalliques présentes dans la solution, en empêchant le dépôt, sous forme de composés cristallisés quelconques, d'un ou plusieurs éléments, pendant le processus d'évaporation jusqu'à ce que la viscosité de la solution ou suspension concentrée soit assez forte pour qu'une séparation ultérieure des éléments, pendant la décomposition proprement dite, soit impossible.

Ce but est précisément atteint dans l'invention, par l'addition à une solution quelconque des éléments à associer, du ou des composés organiques ou organométalliques décomposable(s) à la chaleur, et, de préférence fortement complexants.

Les composés organiques sont généralement choisis parmi les acides organiques contenant deux fonctions acides ou plus (diacides, triacides ou plus), tels que les acides oxalique, malonique, succinique, glutarique, adipique, maléique, fumarique ; les acides alcools, tels que les acides glycolique, lactique, mandélique, hydroxyacrylique, hydroxybutyrique ; les acides aminés, tels que l'acide aminoacétique, appelé aussi glycine, l'alanine, la leucine, l'acide aminopropionique, l'ornithrine, la lysine, l'arginine ; les acides cétoniques, tels que les acides glyoxylique, pyruvique, cétobutyrique, levulique ; les acides plus compliqués, portant deux ou plusieurs fonctions acides et d'autres fonctions alcool ou amine ou carbonyle, tels que les acides malique, tartrique, citrique, aconitique, citraconique, aspartique et glutamique ; et les mélanges de ceux-ci.

On peut utiliser soit un composé organique ou organométallique seul, soit un mélange de deux ou plus de ceux-ci en diverses proportions.

Dans le procédé de l'invention, le ou les mêmes composés carbonés sont utilisés pour (i) complexer éventuellement les cations en solution ; (ii) figer celle-ci, y compris dans les cas où elle présente une ou plusieurs phases en suspension fine, en participant, ou en étant à l'origine d'une augmentation de sa viscosité par un traitement adapté ; (iii) former le carbone assurant la conductivité électronique du composite et ; (iv) servir de combustible à la réaction de pyrolyse qui peut parfois être caractérisée d'autocombustion.

On peut également utiliser, lorsque le composé organique complexant est un acide les sels d'ammonium ou les sels d'une base organique de cet acide, voire même directement un sel dans lequel le cation est choisi parmi A, D ou M. La conservation de l'homogénéité du milieu durant l'étape de formation du précurseur peut dans certains cas être assistée par un ou plusieurs oxoanions (ZO₄)^{x-} du fait de leur caractère complexant.

La solution obtenue après concentration rapide constitue le précurseur ("mixte, homogène") ; il s'agit d'une solution homogène très visqueuse et pouvant même être solide, mais non cristallisée.

Les précurseurs obtenus ont, outre l'avantage d'une parfaite homogénéité à l'échelle microscopique, celui d'être fabriqués de manière très aisée. Les précurseurs mis en oeuvre dans le procédé de l'invention s'obtiennent à partir de sels quelconques des éléments désirés, préalablement dissous dans un solvant ou non encore dissous par simple adjonction de substance complexante et, éventuellement, d'un acide ou d'une base usuels destinés à faciliter la dissolution des éléments ou à renforcer la stabilité de la solution.

Lesdits précurseurs ont, en outre, l'avantage d'associer les espèces métalliques dans les proportions choisies contrairement à d'autres précurseurs.

Pour la fabrication du précurseur, on utilise, par exemple une solution contenant les éléments désirés soit sous forme d'ions complexes, soit encore sous toute autre forme stable éventuellement de suspension fine dans les conditions de pH du milieu. De manière plus précise, n'importe quel sel soluble ou solubilisable contenant un ou plusieurs éléments, décomposable dans les conditions de préparation du matériau final peut être utilisé ; il peut également s'agir de sel d'un acide contenant un des éléments que l'on veut associer, des suspensions contenant une ou plusieurs substances non dissoutes dans le solvant, tels que les métaux ou les métalloïdes eux-mêmes sous forme élémentaire, des oxydes ou des sels peu solubles, à condition que ces substances se dissolvent sous l'action du ou des composés organiques jouant généralement le rôle d'agent complexant ou des autres composants du mélange.

Il se peut également que la présence des différents éléments en solution entraîne la formation d'un léger précipité (qui correspond aux phases en suspension précédemment décrites). Dans ce cas, l'homogénéité du milieu et notamment la stabilité de la suspension est facilitée par la présence du ou des composés organiques ou organométalliques avantageusement complexants ainsi que par l'agitation du milieu.

La solution ou la suspension contenant les éléments à associer dans les proportions visées dans le matériau actif (définis notamment par les coefficients a, d, m, z) est additionnée d'un ou de plusieurs composés organiques ou organométalliques tels que définis plus haut qui jouent avantageusement le rôle de substance complexante et, éventuellement, d'acide ou de base facilitant la mise en solution.

Les proportions du ou des composés organique(s) ou organométallique(s) qui jouent le rôle de substance complexante dépendent de la composition en éléments à associer ainsi que du taux de composé conducteur électronique, tel que le carbone que doit comporter le composite ; on utilise habituellement de 0,1 à 10, de préférence de 0,5 à 2 équivalents-gramme de composé organique ou organométallique par exemple d'acide par équivalent-gramme à complexer ; ces quantités sont données à titre indicatif et ne peuvent en aucun cas être considérées comme impératives, de bons résultats pouvant être obtenus pour des proportions différentes.

Dans certains cas, pour faciliter la mise en solution, on ajoute un acide et/ou une base choisis de manière qu'ils se décomposent sans laisser de résidu et en quantité suffisante pour solubiliser les éléments à associer. Si l'addition d'une telle substance est nécessaire, la quantité à ajouter correspond, de préférence, à la stoechiométrie des composés solubles connus des éléments et de l'acide et/ou de la base.

Les sels sont dissous aussi bien dans une solution aqueuse, neutre, basique ou acide que dans un liquide autre que l'eau. Les solvants usuels renfermant de préférence de 1 à 20 atomes de carbone par molécule tels que le diméthylformamide, le diméthylsulfoxyde, le N-méthylpyrrolidone, le dioxane, le nitrométhane, le nitro-benzène, les nitrites, les alcools, les cétones conviennent parfaitement.

La solution ou suspension obtenue est alors évaporée, soit à la pression atmosphérique, soit sous vide, jusqu'à l'obtention d'un sirop visqueux ou d'un solide amorphe. La qualité du précurseur obtenu dépend à la fois de la composition du mélange et des modalités de cette évaporation. Celle-ci doit être aussi rapide que possible, accompagnée éventuellement d'une agitation intense de la solution, afin d'empêcher toute cristallisation. De préférence, on opère sous pression réduite à savoir généralement sous un vide primaire par exemple proche de 10⁻² atmosphère à 10⁻³ atmosphère. Une méthode pour obtenir ce résultat est d'évaporer d'abord la solution dans un évaporateur rotatif jusqu'à obtention d'un produit limpide visqueux. La viscosité de cette solution concentrée doit être élevée par exemple supérieure à 200 centipoises à 20°C. Cette solution concentrée est ensuite évaporée sous vide à une température égale ou différente, jusqu'à obtention d'un solide se présentant parfois sous la forme d'un verre dur et cassant. Mais il est également possible de réaliser cette évaporation suivant d'autres méthodes, et notamment en une seule étape. Quelle que soit la méthode choisie, l'évaporation peut être réalisée à des températures quelconques supérieures ou inférieures à la température de fusion du solvant ou à sa température d'ébullition. Il n'y a pas de limite supérieure de viscosité.

Les procédés de lyophilisation d'une part, de séchage par atomisation ("spray-drying") d'autre part, sont d'autres méthodes permettant l'élimination du solvant.

Le précurseur obtenu après le prétraitement se présente parfois également sous la forme d'une mousse très légère, constituée par les fines écailles d'un verre, dont la coloration dépend principalement de la nature et de la concentration en ions métalliques.

Il est possible aussi d'obtenir un précurseur qui présente une faible cristallinité.

Dans un deuxième mode de réalisation, on forme une solution ou suspension de préférence très stable d'ions contenant les éléments à associer dans le composé AₐD_{d}MₘZ_{z}OₒNₙF_{f} et d'un ou plusieurs composés organiques ou organométalliques, de préférence carbonés, susceptibles de se décomposer thermiquement (à la chaleur), de préférence le ou lesdits composés organiques sont en outre des composés complexants et avantageusement il s'agit en outre de composés polymérisables.

Cette solution contient en fait les mêmes composants que celle préparée dans le premier mode de réalisation et est préparée de la même manière.

A cette solution on ajoute un composé généralement un polyol ou une polyamine de manière à réaliser une polymérisation de l'ensemble de la solution afin de former un gel.

Le polyol est de préférence choisi parmi les glycols, de préférence encore parmi les alkylène (1 à 6C) et (poly)alkylène (1 à 6 C) glycols, tels que l'éthylèneglycol et le diéthylène glycol.

Le gel obtenu est séché de la même manière que précédemment et le gel séché constitue donc le précurseur mixte homogène selon l'invention ; puis il est pyrolysé dans une atmosphère judicieusement choisie pour laisser la quantité requise de carbone intimement mélangée au composé électrochimiquement actif AₐD_{d}MₘZ_{z}OₒNₙF_{f}.

Dans un troisième mode de réalisation, on forme une solution d'ions contenant les éléments à associer dans le composé AₐD_{d}MₘZ_{z}OₒNₙF_{f} et on ajoute à cette solution un ou plusieurs composés organiques gélifiants solubles dans l'eau susceptibles de former un gel organique emprisonnant lesdits ions, afin de former un gel organique emprisonnant lesdits ions ; puis on sèche ledit gel généralement dans les mêmes conditions que précédemment.

Ce ou ces composés organiques "gélifiants" sont choisis de préférence parmi les (méth)acrylamides, les (méth)acrylates et les carbohydrates polymérisables comme l'amidon et plus précisément les saccharides et leurs dérivés.

Dans un quatrième mode de réalisation, le précurseur "mixte homogène" mis en oeuvre dans le procédé selon l'invention est obtenu par polymérisation directe de type sol-gel entre un alcoxyde de l'élément Z (un non métal) tel que le silicium par exemple et un oxoanion généralement complexant tel que (ZO₄)^{x-} (ou un précurseur de celui-ci) dans une solution, par exemple une solution aqueuse, d'ions, contenant les éléments A, D, M à associer dans le composé AₐD_{d}MₘZ_{z}OₒNₙF_{f}, de sorte que les métaux A, D et M soient piégés dans le réseau ainsi formé, puis par séchage généralement tel que défini précédemment.

Par décomposition dans une atmosphère judicieusement choisie, on forme ensuite le composite AₐD_{d}MₘZ_{z}OₒNₙF_{f}.

Comme on l'a déjà indiqué plus haut, la mise en contact, au lieu d'être réalisée en solution, ou de manière générale par un procédé essentiellement par voie liquide, peut aussi être réalisée par un procédé essentiellement par voie solide appelé trituration mécanique, dans lequel on réalise le mélange des composés des éléments à associer dans le composé électrochimiquement actif à préparer, avec le ou les composés organiques ou organométalliques décomposables à la chaleur, la durée de la trituration mécanique étant suffisante pour obtenir une solution homogène, contenant le ou les composés organiques ou organométalliques, et les composés des éléments à associer dans le composé actif.

Par déshydratation sous vide, la solution homogène visqueuse, se transforme en une substance vitreuse, qui est ensuite décomposée thermiquement.

Ce mode de réalisation dans lequel on part d'un mélange de sels d'acides à l'état cristallisé dont la mise en solution est obtenue par l'eau de cristallisation des sels présente les avantages suivants :
- la mise en solution des réactifs de départ étant obtenue par simple trituration mécanique, et non plus par apport d'eau ou de solvant, il n'y a plus à évaporer cette eau ou ce solvant ;
- de plus, le fait consistant à passer directement des réactifs solides à l'état cristallisé ou amorphe, à la solution visqueuse, permet d'éviter les phénomènes de précipitation qui peuvent éventuellement se produire au cours de l'étape de concentration de la solution, et qui obligent à respecter certaines conditions opératoires bien déterminées et notamment d'effectuer une évaporation de la solution assez rapide.

Le mélange des sels de départ et ou des composés organiques ou organométalliques peut être éventuellement additionné d'un acide et/ou d'une base choisie de manière qu'ils se décomposent sans laisser de résidu, et en quantité suffisante pour solubiliser les éléments à associer.

On peut également, pour des raisons analogues, ajouter au mélange de l'eau et/ou un liquide, autre que l'eau. La quantité d'eau et/ou de solvant ajoutée sera dans tous les cas inférieure à la quantité minimale qui devrait être utilisée pour obtenir une solution homogène visqueuse, lorsque la mise en solution des réactifs de départ est réalisée par apport d'eau ou d'un solvant.

Les sels solides et le ou les composés organiques, préalablement mélangés grossièrement à l'aide par exemple d'un mortier, sont introduits dans un appareil tel que mixeur, malaxeur à rouleurs, broyeur, mortier, pour être broyés et malaxés. On utilisera de préférence un malaxeur à lames sigmoïdes qui donne les meilleurs résultats.

Le malaxage des sels solides et du ou des composés organiques ou organométalliques, en présence éventuellement des diverses substances facultatives précitées, est effectué à une température comprise entre la température de congélation commençante de la solution à obtenir et 150°C, et de préférence à une température comprise entre 0 et 90°C, pendant un temps suffisant pour que l'on obtienne une solution limpide, de viscosité suffisante, par exemple supérieure à 200 centipoises à 20 °C.

Ce liquide peut, comme on l'a souligné plus haut, être séché par atomisation, ou déshydraté sous vide, généralement sous un vide primaire, par exemple de 10⁻² à 10⁻³ atmosphère, en un solide amorphe.

Dans ce mode de réalisation, il n'est plus nécessaire de procéder à une concentration très rapide de la solution, les risques de précipitation au cours de l'étape de concentration étant évités.

Il est souvent avantageux de réaliser la préparation du précurseur dans le même appareil, en combinant simultanément l'effet de la trituration mécanique, l'application d'un vide, par exemple d'un vide primaire (10⁻² à 10⁻³ atmosphère par exemple), et l'application d'une température comprise entre les limites précédentes. La viscosité de la solution précitée augmente alors et celle-ci se transforme spontanément en une masse pulvérulente, correspondant à un précurseur vitreux ou amorphe.

La durée de la transformation est conditionnée par la quantité d'eau ou de solvant à éliminer, et par la température et la pression à laquelle celle-ci est réalisée.

A l'issue de la préparation du précurseur mixte homogène, on réalise la décomposition de ce précurseur mixte homogène que l'on peut aussi quantifier de pyrolyse ou de calcination.

Cette décomposition peut être réalisée sous vide, par exemple dans un vide de 10⁻² à 10³ atmosphère, ou bien sous une atmosphère contrôlée dans des temps courts, déjà définis plus haut, de l'ordre de 15 minutes par exemple.

Par atmosphère contrôlée, on entend une atmosphère dont la composition est parfaitement maîtrisée et judicieusement choisie.

L'atmosphère contrôlée est de préférence une atmosphère inerte ou légèrement réductrice. L'atmosphère inerte est généralement une atmosphère constituée d'azote ou d'argon ou de tout autre gaz inerte ou d'un de leurs mélanges, de préférence ces gaz sont de haute pureté, à savoir, généralement avec une teneur en O₂≤1 ppm.

L'atmosphère légèrement réductrice est généralement une atmosphère comprenant quelques %, généralement de 1 à 5 ou 10% (3% par exemple) de gaz hydrogène dans de l'argon, de l'azote ou tout autre gaz inerte ou leurs mélanges.

La décomposition thermique du précurseur est généralement réalisée à une température que l'on peut qualifier de modérée, à savoir une température généralement inférieure à 900°C, de préférence inférieure ou égale à 800°C, et de préférence encore inférieure ou égale à 750°C.

En outre, la décomposition thermique est généralement réalisée à une température supérieure à 200°C et en particulier voisine de 600°C.

Cette décomposition, calcination est parfois le siège d'une réaction très exothermique caractéristique des réactions d'autocombustion associée à un dégagement gazeux important en un temps relativement court, ce qui se traduit par une grande finesse des cristallites de poudre obtenus.

Cette décomposition peut être faite en lit fixe, en lit mobile ou en lit fluide. On peut même réaliser simultanément le séchage de la solution ou du gel et la décomposition du précurseur, à condition de contrôler la succession des opérations. Une atomisation dans une atmosphère chaude peut permettre d'atteindre ce but. En général, il y a intérêt à provoquer une calcination aussi rapide que possible, afin d'éviter les ségrégations des éléments pendant les stades où le composite final n'est pas encore formé.

Quels que soient l'aspect et les caractéristiques du précurseur de départ (verre, laque, mousse, sphérules ou grains sphériques), le produit final obtenu que l'on vient de définir et qui provient de sa décomposition thermique se présente généralement sous la forme d'une cendre légère, constituée de grains très fins, de dimensions habituellement comprises entre 100 et 5000 *Å* et qui en outre a généralement une surface spécifique élevée, à savoir généralement de 10 à 50 m²/g.

## Revendications

1. Procédé de préparation d'un matériau composite comprenant un composé actif d'électrode de formule AₐD_{d}MₘZ_{z}OₒNₙF_{f}, dans laquelle :
- A est un métal alcalin,
- D est choisi parmi les métaux alcalino-terreux et les éléments de la colonne III de la classification périodique des éléments, à l'exclusion de B,
- M est un métal de transition ou un mélange de métaux de transitions,
- Z est un non métal choisi parmi S, Se, P, As, Si, Ge, Sn et B,
- O est l'oxygène, N l'azote et F le fluor,
- a, d, m, z, o, n et f sont des nombres réels supérieurs ou égaux à 0 et sont choisis de manière à assurer l'électroneutralité ;
et un composé conducteur électronique tel que le carbone ;
dans lequel on décompose thermiquement, en une durée courte, un précurseur mixte homogène contenant tous les éléments A, D, M, Z, O, N et F formant le composé actif d'électrode ainsi qu'un ou plusieurs composés organiques et/ou organométalliques, de façon à obtenir le matériau composite.

2. Procédé selon la revendication 1, dans lequel ledit, lesdits composé(s) organique(s) et/ou organométallique(s) sont des composés carbonés, comprenant de préférence une proportion atomique majoritaire de carbone.

3. Procédé de la revendication 1, dans lequel A est choisi parmi Li, Na, K et leurs mélanges.

4. Procédé selon l'une quelconque des revendications 1 et 2, dans lequel D est choisi parmi Mg, A1, Ga et leurs mélanges.

5. Procédé selon l'une quelconque des revendications précédentes, dans lequel M est choisi parmi Fe, Ni, Co, Mn, V, Mo, Nb, W, Ti et leurs mélanges.

6. Procédé selon l'une quelconque des revendications précédentes, lequel A est Li ou Na, et le composé actif d'électrode est un composé d'insertion du lithium ou du sodium tel que LiFePO₄, LiFeBO₃ ou NaFeBO₃.

7. Procédé selon l'une quelconque des revendications précédentes, dans lequel le pourcentage massique final en composé conducteur électronique, tel que le carbone dans le matériau composite est de 0,1 à 55%, de préférence de 0,2 à 15%.

8. Procédé selon l'une quelconque des revendications précédentes, dans lequel la décomposition thermique du précurseur mixte homogène est réalisée sous vide.

9. Procédé selon l'une quelconque des revendications 1 à 7, dans lequel la décomposition thermique du précurseur mixte homogène est réalisée dans une atmosphère contrôlée.

10. Procédé selon la revendication 9, dans lequel l'atmosphère contrôlée est une atmosphère inerte ou légèrement réductrice.

11. Procédé selon l'une quelconque des revendications précédentes, dans lequel la décomposition thermique du précurseur mixte homogène est réalisée à une température inférieure à 900°C, de préférence inférieure ou égale à 800°C, et de préférence encore inférieure ou égale à 750°C.

12. Procédé selon la revendication 11, dans lequel la décomposition thermique est en outre, réalisée à une température supérieure à 200°C, en particulier voisine de 600°C.

13. Procédé selon l'une quelconque des revendications précédentes, dans lequel la décomposition thermique est réalisée en une durée inférieure ou égale à 1 heure, de préférence inférieure ou égale à 30 minutes.

14. Procédé selon la revendication 13, dans lequel la décomposition thermique est réalisée en une durée de 5 minutes à 1 heure, de préférence de 10 minutes à 30 minutes, par exemple de 15 minutes.

15. Procédé selon l'une quelconque des revendications précédentes, dans lequel le composé précurseur mixte, homogène est préparé en mettant en contact à l'échelle moléculaire un ou plusieurs composé(s) contenant un ou plusieurs élément(s) choisi(s) parmi les éléments A, D, M, Z, O, N, F formant le composé actif d'électrode avec un ou plusieurs composé(s) organique(s) et/ou organométallique(s), de préférence carbonés, susceptibles d'être décomposés thermiquement, afin d'obtenir un mélange du ou desdits composés contenant un ou plusieurs élément(s) choisi(s) parmi les éléments A, D, M, Z, O, N et F et du ou desdits composés organiques et/ou organométalliques.

16. Procédé selon la revendication 15, dans lequel les proportions et les compositions respectives du ou desdits composé(s) contenant ou plusieurs élément(s) choisi(s) parmi les éléments A, D, M, Z, O, N, F et dudit ou desdits composés organiques et/ou organométalliques, de préférence carbonés, décomposables thermiquement sont choisies pour respecter les proportions des éléments A, D, M, Z, O, N, F, et du carbone, dans le matériau composite final.

17. Procédé selon l'une quelconque des revendications 15 et 16, dans lequel la mise en contact est réalisée en solution, ladite solution pouvant éventuellement présenter un ou plusieurs phases en suspension fine.

18. Procédé selon l'une quelconque des revendications 15 et 16, dans lequel la mise en contact est réalisée par une action mécanique, appelée trituration.

19. Procédé selon l'une quelconque des revendications 15 à 18, dans lequel à l'issue de la mise en contact le mélange obtenu est séché.

20. Procédé selon la revendication 17, dans lequel le précurseur mixte homogène est préparé en formant une solution d'ions contenant les éléments à associer dans le composé AₐD_{d}MₘZ_{z}OₒNₙF_{f} et d'un ou plusieurs composés organiques ou organométalliques, de préférence carbonés, susceptibles de se décomposer thermiquement, de préférence complexants ; et en concentrant ensuite très rapidement ladite solution de manière à la figer et à la sécher.

21. Procédé selon la revendication 17, dans lequel le précurseur mixte homogène est préparé en formant une solution d'ions contenant les éléments à associer dans le composé AₐD_{d}MₘZ_{z}OₒNₙF_{f} et d'un ou plusieurs composés organiques ou organométalliques, de préférence carbonés, susceptibles de décomposer thermiquement et de préférence complexants, en ajoutant à ladite solution un polyol ou une polyamine de manière à réaliser une polymérisation pour former un gel, et en séchant ledit gel.

22. Procédé selon la revendication 20 ou 21, dans lequel le ou lesdits composés organiques carbonés susceptibles de se décomposer thermiquement et, de préférence complexants sont choisis parmi les acides organiques contenant deux fonctions acides ou plus, tels que les acides oxalique, malonique, succinique, glutarique, adipique, maléique, fumarique ; les acides alcools, tels que les acides glycolique, lactique, mandélique, hydroxyacrylique, hydroxybutyrique ; les acides aminés, tels que l'acide aminoacétique, appelé aussi glycine, l'alanine, la leucine, l'acide aminopropionique, l'ornithrine, la lysine, l'arginine ; les acides cétoniques, tels que les acides glyoxylique, pyruvique, cétobutyrique, levulique ; les acides plus compliqués, portant deux ou plusieurs fonctions acides et d'autres fonctions alcool ou amine ou carbonyle, tels que les acides malique, tartrique, citrique, aconitique, citraconique, aspartique et glutamique ; et les mélanges de ceux-ci.

23. Procédé selon la revendication 21, dans lequel ledit polyol est choisi parmi les glycols, de préférence parmi les alkylène (1 à 6C) et poly(alkylène (1 à 6C) glycols tels que l'éthylèneglycol et le diéthylène glycol.

24. Procédé selon la revendication 17, dans lequel le précurseur mixte homogène est préparé en formant une solution d'ions contenant les éléments à associer dans le composé AₐD_{d}MₘZ_{z}OₒNₙF_{f}, et en ajoutant à cette solution un ou plusieurs composés organiques gélifiants solubles dans l'eau, afin de former un gel organique comprenant lesdits ions, puis en séchant ledit gel.

25. Procédé selon la revendication 24, dans lequel le ou lesdits composés organiques gélifiants sont choisis parmi les (méth)acrylamides, les (méth)acrylates et les carbohydrates polymérisables tels que l'amidon et les saccharides et leurs dérivés.

26. Procédé selon la revendication 17, dans lequel le précurseur mixte homogène est préparé par polymérisation directe de type sol-gel entre un alcoxyde de l'élément Z tel que le silicium, et un oxoanion généralement complexant tel que (ZO₄)^{x-} ou un précurseur de celui-ci, dans une solution d'ions contenant les éléments A, D, M à associer dans le composé AₐD_{d}MₘZ_{z}OₒNₙF_{f} de sorte que les métaux A, D et M soient piégés dans le réseau ainsi formé, puis par séchage.

27. Procédé selon l'une quelconque des revendications 1 à 26, dans lequel le matériau composite se présente sous la forme d'une cendre légère constituée de grains très fins de dimensions comprises entre 100 et 5000 *Å*.

28. Procédé selon la revendication 27, dans lequel le matériau composite a en outre une surface spécifique de 10 à 50 m²/g.

## Claims

1. Process for preparing a composite material comprising an electrode active compound of formula AₐD_{d}MₘZ_{z}OₒNₙF_{f} in which:
- A is an alkali metal,
- D is chosen from alkaline earth metals and elements of column III of the Periodic Table of Elements, with the exclusion of B,
- M is a transition metal or a mixture of transition metals,
- Z is a non-metal chosen from S, Se, P, As, Si, Ge, Sn and B,
- 0 is oxygen, N is nitrogen and F is fluorine,
- a, d, m, z, o, n and f are real numbers greater than or equal to 0 and are chosen so as to ensure electroneutrality;
and an electronically conducting compound such as carbon;
in which a homogeneous mixed precursor containing all the elements A, D, M, Z, O, N and F forming the electrode active compound and also one or more organic and/or organometallic compounds are thermally decomposed, in a short period of time, so as to obtain the composite material.

2. Process according to Claim 1, in which said organic and/or organometallic compound(s) is (are) carbon-based compounds preferably comprising a predominant (major) atomic proportion of carbon.

3. Process according to Claim 1, in which A is chosen from Li, Na and K, and mixtures thereof.

4. Process according to any one of Claims 1 and 2, in which D is chosen from Mg, Al and Ga, and mixtures thereof.

5. Process according to any one of the preceding claims, in which M is chosen from Fe, Ni, Co, Mn, V, Mo, Nb, W and Ti, and mixtures thereof.

6. Process according to any one of the preceding claims, in which A is Li or Na, and the electrode active compound is a lithium insertion compound or a sodium insertion compound, such as LiFePO₄, LiFeBO₃ or NaFeBO₃.

7. Process according to any one of the preceding claims, in which the final percentage by mass of electronically conducting compound such as the carbon in the composite material is from 0.1% to 55%, preferably from 0.2% to 15%.

8. Process according to any one of the preceding claims, in which the thermal decomposition of the homogeneous mixed precursor is carried out under vacuum.

9. Process according to any one of Claims 1 to 7, in which the thermal decomposition of the homogeneous mixed precursor is carried out in a controlled atmosphere.

10. Process according to Claim 9, in which the controlled atmosphere is an inert or slightly reducing atmosphere.

11. Process according to any one of the preceding claims, in which the thermal decomposition of the homogeneous mixed precursor is carried out at a temperature of less than 900°C, preferably less than or equal to 800°C, and more preferably less than or equal to 750°C.

12. Process according to Claim 11, in which the thermal decomposition is also carried out at a temperature above 200°C, in particular in the region of 600°C.

13. Process according to any one of the preceding claims, in which the thermal decomposition is carried out over a duration of less than or equal to 1 hour, preferably less than or equal to 30 minutes.

14. Process according to Claim 13, in which the thermal decomposition is carried out over a duration of 5 minutes to 1 hour, preferably of 10 minutes to 30 minutes, for example of 15 minutes.

15. Process according to any one of the preceding claims, in which the homogeneous mixed precursor compound is prepared by bringing one or more compound(s) containing one or more element(s) chosen from the elements A, D, M, Z, 0, N and F forming the electrode active compound into contact, on the molecular scale, with one or more organic and/or organometallic, preferably carbon-based, compound(s) capable of being thermally decomposed, in order to obtain a mixture of said compound(s) containing one or more element(s) chosen from the elements A, D, M, Z, O, N and F and of said organic and/or organometallic compound(s).

16. Process according to Claim 15, in which the respective proportions and the respective compositions of said compound(s) containing one or more element(s) chosen from the elements A, D, M, Z, 0, N and F and of said organic and/or organometallic, preferably carbon-based, compound(s), which are thermally decomposable, are chosen so as to observe the proportions of the elements A, D, M, Z, O, N and F, and of the carbon, in the final composite material.

17. Process according to any one of Claims 15 and 16, in which the bringing into contact is carried out in solution, it being possible for said solution to optionally have one or more phases in fine suspension.

18. Process according to any one of Claims 15 and 16, in which the bringing into contact is carried out by means of a mechanical action, called trituration.

19. Process according to any one of Claims 15 to 18, in which, at the end of the bringing into contact, the mixture obtained is dried.

20. Process according to Claim 17, in which the homogeneous mixed precursor is prepared by forming a solution of ions containing the elements to be associated in the compound AₐD_{d}MₘZ_{z}OₒNₙF_{f} and of one or more organic or organometallic, preferably carbon-based, compounds capable of thermally decomposing, which are preferably complexing; and by then very rapidly concentrating said solution so as to fix it and to dry it.

21. Process according to Claim 17, in which the homogeneous mixed precursor is prepared by forming a solution of ions containing the elements to be associated in the compound AₐD_{d}MₘZ_{z}OₒNₙF_{f} and of one or more organic or organometallic, preferably carbon-based, compounds capable of thermally decomposing, and which are preferably complexing, by adding a polyol or a polyamine to said solution in such a way as to carry out a polymerization so as to form a gel, and by drying said gel.

22. Process according to Claim 20 or 21, in which said carbon-based organic compound(s) capable of thermally decomposing, and which is (are) preferably complexing, is (are) chosen from organic acids containing two acid functions or more, such as oxalic acid, malonic acid, succinic acid, glutaric acid, adipic acid, maleic acid or fumaric acid; alcohol acids, such as glycolic acid, lactic acid, mandelic acid, hydroxyacrylic acid or hydroxybutyric acid; amino acids, such as aminoacetic acid, also called glycine, alanine, leucine, aminopropionic acid, ornithine, lysine or arginine; ketone acids, such as glyoxylic acid, pyruvic acid, ketobutyric acid or levulic acid; acids which are more complicated, bearing two or more acid functions and other alcohol, amine or carbonyl functions, such as malic acid, tartaric acid, citric acid, aconitic acid, citraconic acid, aspartic acid and glutamic acid; and mixtures thereof.

23. Process according to Claim 21, in which said polyol is chosen from glycols, preferably from (C₁ to C₆) alkylene and poly (C₁ to C₆) (alkylene) glycols, such as ethylene glycol and diethylene glycol.

24. Process according to Claim 17, in which the homogeneous mixed precursor is prepared by forming a solution of ions containing the elements to be associated in the compound AₐD_{d}MₘZ_{z}OₒNₙF_{f}, and by adding to this solution one or more water-soluble gelling organic compounds, in order to form an organic gel comprising said ions, and then by drying said gel.

25. Process according to Claim 24, in which said gelling organic compound(s) is (are) chosen from (meth)acrylamides, (mettz)acrylates and polymerizable carbohydrates, such as starch and saccharides and derivatives thereof.

26. Process according to Claim 17, in which the homogeneous mixed precursor is prepared by direct sol-gel polymerization between an alkoxide of the element Z such as silicon, and a generally complexing oxoanion such as (ZO₄)^{x-} or a precursor thereof, in a solution of ions containing the elements A, D and M to be associated in the compound AₐD_{d}MₘZ_{z}OₒNₙF_{f} such that the metals A, D and M are trapped in the network thus formed, and then by drying.

27. Process according to any one of Claims 1 to 26, in which the composite material is in the form of a light ash consisting of very fine grains of between 100 and 5000 *Å* in size.

28. Process according to Claim 27, in which the composite material also has a specific surface area of from 10 to 50 m²/g.

## Patentansprüche

1. Verfahren zum Herstellen eines Verbundmaterials, umfassend eine elektrodenaktive Verbindung der Formel AₐD_{d}MₘZ_{z}OₒNₙF_{f}, worin:
- A ein Alkalimetall ist,
- D aus Erdalkalimetallen und den Elementen der III. Gruppe des Periodensystems der Elemente mit Ausnahme von B ausgewählt ist,
- M ein Übergangsmetall oder ein Gemisch von Übergangsmetallen ist,
- Z ein aus S, Se, P, As, Si, Ge, Sn und B ausgewähltes Nichtmetall ist,
- O Sauerstoff ist, N Stickstoff ist und F Fluor ist,
- a, d, m, z, o, n und f ganze Zahlen größer als oder gleich 0 sind und so ausgewählt sind, daß die Elektroneutralität sichergestellt ist,
und eine Elektronenleiterverbindung wie etwa Kohlenstoff,
wobei ein homogen gemischter Vorläufer, der alle das elektrodenaktive Material bildenden Elemente A, D, M, Z, O, N und F sowie eine oder mehr organische und/oder metallorganische Verbindungen enthält, in einem kurzen Zeitraum unter Erhalten des Verbundmaterials thermisch zersetzt wird.

2. Verfahren gemäß Anspruch 1, wobei die organische(n) und/oder metallorganische(n) Verbindung(en) eine kohlenstoffhaltige Verbindung (Verbindungen) ist (sind), die vorzugsweise eine überwiegenden atomaren Anteil an Kohlenstoff umfassen.

3. Verfahren gemäß Anspruch 1, wobei A aus Li, Na, K und ihren Gemischen ausgewählt ist.

4. Verfahren gemäß einem der Ansprüche 1 und 2, wobei D aus Mg, Al, Ga und ihren Gemischen ausgewählt ist.

5. Verfahren gemäß einem der vorangehenden Ansprüche, wobei M aus Fe, Ni, Co, Mn, V, Mo, Nb, W, Ti und ihren Gemischen ausgewählt ist.

6. Verfahren gemäß einem der vorangehenden Ansprüche, wobei A Li oder Na ist und die elektrodenaktive Verbindung eine Lithium- oder Natriuminsertionsverbindung wie etwa LiFePO₄, LiFeBO₃ oder NaFeBO₃ ist.

7. Verfahren gemäß einem der vorangehenden Ansprüche, wobei der endgültige Massenprozentanteil der Elektronenleiterverbindung wie etwa Kohlenstoff in dem Verbundmaterial 0,1 % bis 55 %, bevorzugt 0,2 bis 15 % ist.

8. Verfahren gemäß einem der vorangehenden Ansprüche, wobei die thermische Zersetzung des homogenen gemischten Vorläufers im Vakuum ausgeführt wird.

9. Verfahren gemäß einem der Ansprüche 1 bis 7, wobei die thermische Zersetzung des homogenen gemischten Vorläufers in einer kontrollierten Atmosphäre ausgeführt wird.

10. Verfahren gemäß Anspruch 9, wobei die kontrollierte Atmosphäre eine inerte oder leicht reduzierende Atmosphäre ist.

11. Verfahren gemäß einem der vorangehenden Ansprüche, wobei die thermische Zersetzung des homogenen gemischten Vorläufers bei einer Temperatur von weniger als 900 °C, vorzugsweise weniger oder gleich 800 °C und noch bevorzugter weniger oder gleich 750 °C durchgeführt wird.

12. Verfahren gemäß Anspruch 11, wobei die thermische Zersetzung außerdem bei einer Temperatur über 200 °C, insbesondere in der Nähe von 600 °C durchgeführt wird.

13. Verfahren gemäß einem der vorangehenden Ansprüche, wobei die thermische Zersetzung über eine Dauer von weniger als oder gleich 1 Stunde, vorzugsweise weniger als oder gleich 30 Minuten durchgeführt wird.

14. Verfahren gemäß Anspruch 13, wobei die thermische Zersetzung über eine Dauer von 5 Minuten bis 1 Stunde, bevorzugt 10 Minuten bis 30 Minuten, zum Beispiel 15 Minuten durchgeführt wird.

15. Verfahren gemäß einem der vorangehenden Ansprüche, wobei die homogene gemischte Vorläuferverbindung durch In-Kontakt-Bringen eines oder mehrerer aus den Elementen A, D, M, Z, O, N und F ausgewählten (ausgewählter), die elektrodenaktive Verbindung bildenden (bildender) Elements (Elemente) im molekularen Maßstab mit einer oder mehr organischen und/oder metallorganischen Verbindung(en), die thermisch zersetzt werden können, um ein Gemisch aus der oder den Verbindung(en), die ein oder mehr aus den Elementen A, D, M, Z, O, N und F ausgewählte(s) Element(e) enthalten, und den organischen und/oder metallorganischen Verbindungen zu erhalten.

16. Verfahren gemäß Anspruch 15, wobei die jeweiligen Anteile und die Zusammensetzungen der Verbindung(en), die ein oder mehr aus den Elementen A, D, M, Z, O, N und F ausgewählte Element(e) enthält (enthalten), und die vorzugsweise kohlenstoffhaltigen organischen und/oder metallorganischen Verbindung(en), die thermisch zersetzt werden können, so gewählt sind, daß die Anteile der Elemente A, D, M, Z, O, N, F und des Kohlenstoffs im fertigen Verbundmaterial eingehalten werden.

17. Verfahren gemäß einem der Ansprüche 15 und 16, wobei das In-Kontakt-Bringen in Lösung durchgeführt wird und der Lösung ermöglicht wird, gegebenenfalls eine oder mehr Phasen in feiner Suspension aufzuweisen.

18. Verfahren gemäß einem der Ansprüche 15 und 16, wobei das In-Kontakt-Bringen mittels einer Trituration genannten mechanischen Einwirkung durchgeführt wird.

19. Verfahren gemäß einem der Ansprüche 15 bis 18, wobei das Gemisch am Ende des In-Kontakt-Bringens getrocknet wird.

20. Verfahren gemäß Anspruch 17, wobei der homogene gemischte Vorläufer durch Bilden einer Lösung von Ionen, die die in der Verbindung AₐD_{d}MₘZ_{z}OₒNₙF_{f} zusammenzubringenden Elemente enthält, und einer oder mehr organischen oder metallorganischen, vorzugsweise kohlenstoffhaltigen Verbindungen, die thermisch zersetzt werden können und vorzugsweise komplexierend sind, und unter anschließendem sehr raschem Einengen der Lösung, um sie zu verfestigen und zu trocknen, hergestellt wird.

21. Verfahren gemäß Anspruch 17, wobei der homogene gemischte Vorläufer durch Bilden einer Lösung von Ionen, die die in der Verbindung AₐD_{d}MₘZ_{z}OₒNₙF_{f} zusammenzubringenden Elemente enthält, und einer oder mehr organischen oder metallorganischen, vorzugsweise kohlenstoffhaltigen Verbindungen, die thermisch zersetzt werden können und vorzugsweise komplexierend sind, unter Zufügen eines Polyols oder Polyamins zu der Lösung, um eine Polymerisation zum Bilden eines Gels auszuführen, und Trocknen des Gels hergestellt wird.

22. Verfahren gemäß Anspruch 20 oder 21, wobei die kohlenstoffhaltige(n) organische(n) Verbindung(en), die thermisch zersetzt werden kann (können) und bevorzugt komplexierend ist (sind), aus den zwei Säurefunktionen oder mehr enthaltenden organischen Säuren wie etwa Oxal-, Malon-, Bernstein-, Glutar-, Adipin-, Malein-, Fumarsäure; Alkoholsäuren wie etwa Glykol-, Milch-, Mandel-, hydroxyacryl-, Hydroxybuttersäure; aminierten Säuren wie etwa auch Glycin genannter Aminoessigsäure, Alanin, Leucin, Aminopropionsäure, Ornithin, Lysin, Arginin; Ketosäuren wie etwa Glyoxyl-, Brenztrauben-, Ketobutter-, Lävulinsäure; komplizierteren Säuren, die zwei oder mehr Säurefunktionen und andere Alkohol- oder Amin- oder Carbonylfuktionen tragen, wie etwa Äpfel-, Wein-, Citronen-, Aconit-, Citracon-, Asparagin- und Glutaminsäure und Gemischen derselben ausgewählt sind.

23. Verfahren gemäß Anspruch 21, wobei das Polyol aus den Glykolen, bevorzugt aus den (1 bis 6C)Alkylen- und Poly((1 bis 6C)alkylenglykolen) wie etwa Ethylenglykol und Diethylenglykol ausgewählt ist.

24. Verfahren gemäß Anspruch 17, wobei der homogene gemischte Vorläufer durch Bilden einer Lösung von Ionen, die die in der Verbindung AₐD_{d}MₘZ_{z}OₒNₙF_{f} zusammenzubringenden Elemente enthält, unter Zufügen einer oder mehrerer wasserlöslicher, gelbildender organischer Verbindungen zum Bilden eines die Ionen umfassenden organischen Gels und dann unter Trocknen des Gels hergestellt wird.

25. Verfahren gemäß Anspruch 24, wobei die gelbildende(n) organische(n) Verbindung(en) aus den (Meth)Acrylamiden, den (Meth)Acrylaten und den polymerisierbaren Kohlenhydraten wie etwa Amidon und den Sacchariden und ihren Derivaten ausgewählt ist (sind).

26. Verfahren gemäß Anspruch 17, wobei der homogene gemischte Vorläufer durch direkte Polymerisation des Sol-Gel-Typs zwischen einem Alkoxid des Elements Z wie etwa Silizium und einem im allgemeinen komplexierenden Oxoanion wie etwa (ZO₄)^{x-} oder einem Vorläufer desselben in einer Lösung von Ionen, die die in der Verbindung AₐD_{d}MₘZ_{z}OₒNₙF_{f} zusammenzubringenden Elemente A, D und M enthält, so daß die Metalle A, D und M in dem auf diese Weise gebildeten Netzwerk eingeschlossen sind, und anschließend durch Trocknen hergestellt sind.

27. Verfahren gemäß einem der Ansprüche 1 bis 26, wobei das Verbundmaterial in Form einer leichten Asche vorliegt, die sich aus sehr feinen Körnern mit Abmessungen zwischen 100 und 5000 Å zusammensetzt.

28. Verfahren gemäß Anspruch 27, wobei das Verbundmaterial weiter eine spezifische Oberfläche von 10 bis 50 m²/g aufweist.
